Europäisches Patentamt

European Patent Office

Office européen des brevets

(11) Publication number: **0 503 217 A2**

# EUROPEAN PATENT APPLICATION

(21) Application number: **91830133.4**

(22) Date of filing: **09.04.91**

(51) Int. Cl.5: **B21D 47/04**

(30) Priority: **08.03.91 IT 59991**

(43) Date of publication of application:
**16.09.92 Bulletin 92/38**

(84) Designated Contracting States:
**AT CH DE ES FR GB LI**

(71) Applicant: **TERZI PROFILATI S.r.l.**
**Via Trieste 82**
**I-21011 Casorate Sempione (VA)(IT)**

(72) Inventor: **Terzi, Enrico**
**Via Monteleone 34**
**I-21013 Gallarate (VA)(IT)**

(74) Representative: **Righetti, Giuseppe**
**Bugnion S.p.A. Via Carlo Farini, 81**
**I-20159 Milano(IT)**

(54) **A process for the continuous manufacture of section members of closed section provided with bilateral perforations and the product thus obtained.**

(57) The described process comprises the following steps: unwinding at least a pair of strips (4a, 4b) from at least two coils (5a, 5b) disposed alongside each other and folding each strip lengthwise to give it a polygonal configuration at least open at an access side (8a, 8b) thereof, each strip (4a, 4b) defining one half (8a, 8b) of the section member to be produced. Then a punching step is carried out on the section member halves so as to form a plurality of perforations (2) longitudinally distributed on at least one side of the open polygonal configuration. The two halves are subsequently moved close to each other so that the respective opposite longitudinal edges (17a, 17b) defined at said access sides may match thereby defining a closed polygonal configuration and said halves are then integrally jointed along said mating longitudinal edges. The section member (1) thus obtained is cut into pieces (21) of the desired length.

FIG.1

The present invention relates to a process for the continuous manufacture of section members of closed section, or solid section members, provided with bilateral perforations, as well as to the product obtained by this process.

In greater detail, the present invention relates to the production of section members of the type used for example for making uprights and crosspieces in shelvings and bearing frameworks in general.

It is known that in the production of uprights, crosspieces and bearing frameworks in general, tubular metal section members having a closed polygonal configuration are often used which are provided with longitudinally distributed perforations for the insertion of hooks or other elements enabling the fastening of other components to the structure.

In a known method for the manufacture of these section members, a flat strip continuously drawn from a coil is submitted, by successive passages through one series of forming rollers, to first longitudinal folding operations as a result of which two side portions of the strip become substantially perpendicular to the remaining part of the strip itself.

A punching station located downstream of the first series of rollers, produces a plurality of perforations distributed longitudinally according to a predetermined pitch on the strip.

Subsequently the strip meets a second series of forming rollers that, as a result of other folding operations, substantially give a closed polygonal configuration to the workpiece. On coming out of the second series of rollers, the side edges of the strip, which are disposed close to each other due to the folding operations carried out on the strip, are integrally jointed by induction welding.

The obtained product is then cut into pieces of the desired length.

While the above method allows the achievement of a high productivity, it cannot be used when the perforations produced on the section member must be necessarily disposed close to one of the foldings. It has been found in fact that the deformations or rollings undergone by the material in the region very close to the foldings would inevitably cause undesirable geometrical and size variations to the perforations. In addition, due to its passage between the rollers during the folding, the semifinished product can easily undergo a rolling effect resulting in a pitch alteration in the perforations.

In another known manufacturing method, in the same manner as above described a flat strip is submitted to a number of longitudinal folding operations as a result of which the strip substantially acquires a closed polygonal configuration. Subsequently the workpiece is submitted to welding so as to integrally joint the longitudinal edges which are disposed close to each other as a result of the folding operations.

The section members thus obtained, after being cut to the desired length, are submitted to a punching operation aiming at obtaining the longitudinally distributed perforations. In greater detail, the section member being worked, longitudinally moved according to a step-by-step feed, is submitted to the action of one or more dies and corresponding punches that gradually carry out the desired perforations spaced apart from one another according to a predetermined value.

Usually the dies, supported in cantilevered fashion by a rod of appropriate length, are introduced into the section member, while the punches operate externally to said section member.

This method too however has been found to have some drawbacks.

One of these drawbacks resides in that the section member is produced by two separate workings, i.e. a forming work for the achievement of the closed section through folding operations, and a punching work.

In addition, not only the step-by-step punching is very slow but it can also involve errors in the accuracy of positioning of the individual perforations due to the sum of all errors made during the forward movement.

Since the dies must necessarily be carried in cantilevered fashion there is a restriction in the maximum section member length and a reduction in the flexibility of use of the single machines.

The general object of the invention is to solve the problems of the known art by a process for the continuous manufacture of section members of any length provided with perforations that are perfectly shaped and longitudinally distributed in a regular manner and in which the punching burrs are oriented towards the inside of the section members.

The foregoing and further objects that will become more apparent in the course of the present description are substantially attained by a process for the continuous manufacture of solid section members provided with bilateral perforations, characterized in that it comprises the following steps: - unwinding at least a pair of strips from at least two coils disposed alongside each other; longitudinally folding each strip so as to give it a polygonal configuration open at least at an access side thereof, each strip defining one half of the section member to be achieved; punching the section member halves in order to obtain a plurality of perforations distributed longitudinally on at least one side of said open polygonal configuration, moving said halves close to each other so that the respective opposite longitudinal edges defined at said access sides may match thereby defining a closed polygonal configuration; integrally jointing said halves along said mating longitudinal edges; and cutting the obtained section member into pieces of the desired length.

The product obtained by the above process is a solid section member provided with bilateral perforations, characterized in that it comprises at least a pair of halves each of which exhibits a polygonal configuration which is at least open at an access side thereof and is provided with perforations distributed on at least one of its sides, said halves mutually mating at respective longitudinal edges defined on said access sides in order to define a closed polygonal configuration and being integrally jointed by at least two junction lines each defined between two of said longitudinal edges belonging to either half respectively.

Further features and advantages will best be understood from the detailed description of a process for the continuous manufacture of solid section members provided with bilateral perforations, and the product obtained by same, in accordance with the present invention, taken hereinafter by way of non-limiting example with reference to the accompanying drawings, in which:

- Fig. 1 diagrammatically shows an apparatus adapted to carry out a process for the continuous manufacture of section members in accordance with the present invention;
- Fig. 2 is a fragmentary perspective view of a section member made following the process of the invention;
- Figs. 3 to 9 show different operating steps in succession of the section member shown in Fig. 2.

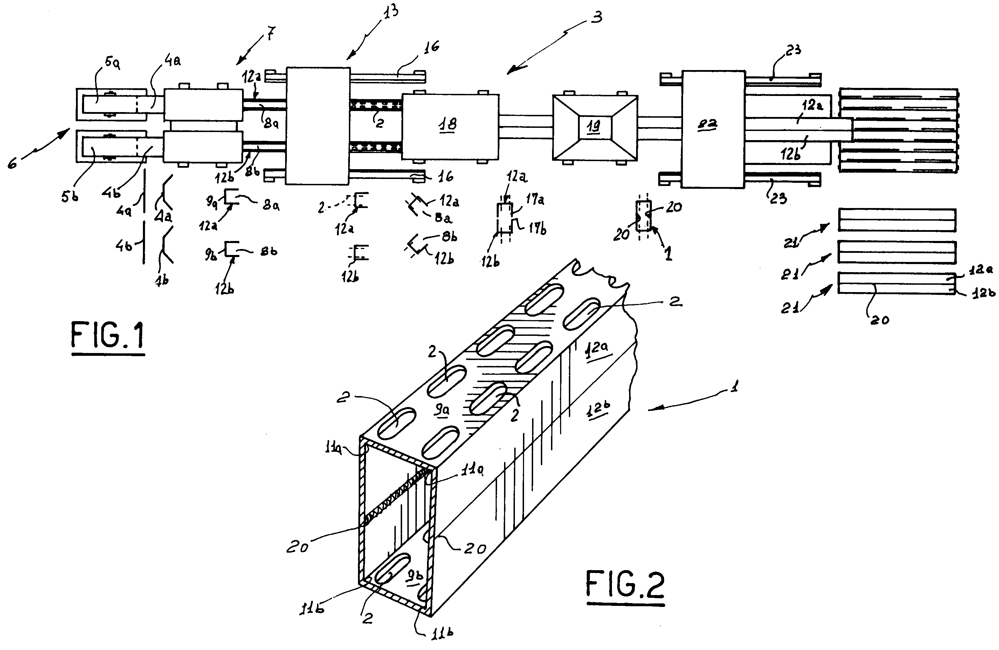

Referring to the drawings and in particular to Fig. 2, a section member made by putting into practice the continuous-manufacture process of the invention has been generally identified by reference numeral 1.

The section member 1 conventionally has a closed tubular configuration, of rectangular form in the embodiment herein shown, and is provided with bilateral perforations 2, distributed longitudinally on the minor sides of said rectangular form.

In accordance with the invention the section member is made by adopting a continuous working process as shown in Figs. 1 and 3 to 9.

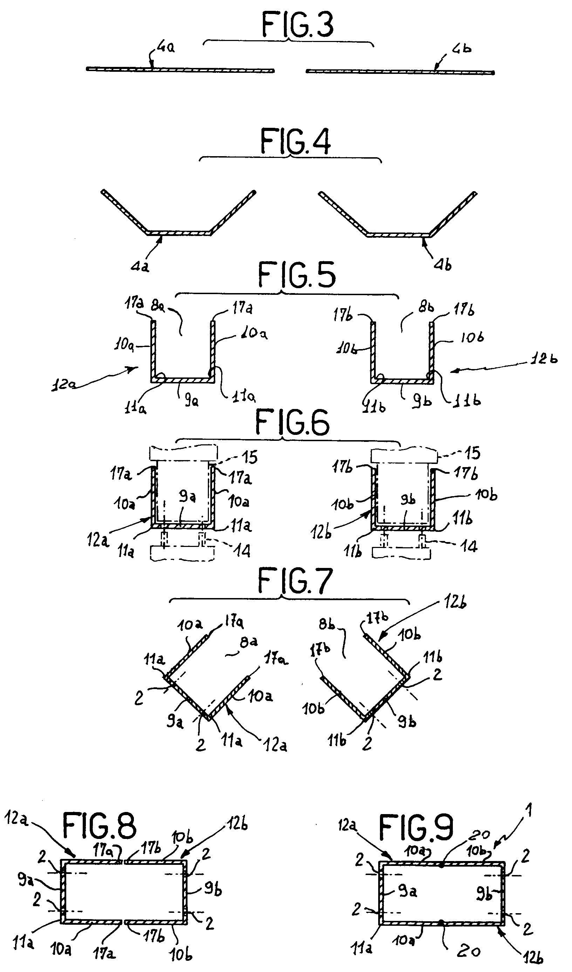

More particularly, diagrammatically shown in Fig. 1 is an apparatus 3 for manufacturing the section member 1 in accordance with the process in question, whereas Figs. 3 to 9 illustrate the different operating steps carried out on the workpiece. For the sake of clarity the same operating steps are reproduced next to the corresponding work stations of the apparatus 3 shown in Fig. 1.

As can be easily viewed from said figures, in an original manner the section member 1 is made starting from at least two flat metal strips 4a, 4b, better shown in Fig. 3, that are gradually unwound from respective coils 5a, 5b disposed alongside each other in a feed station 6 being part of apparatus 3.

Strips 4a, 4b drawn from coils 5a, 5b meet a folding station 7 where, as a result of successive passages through a plurality of forming rollers not shown as known per se and conventional, undergo a longitudinal folding step, shown in Figs. 4 and 5. This operating step aims at giving an open polygonal configuration to each of the strips 4a, 4b, the access side of which is identified at 8a, 8b. The polygonal configuration can be of any type depending upon requirements. In the embodiment shown each strip is provided to have a U-shaped configuration defined by a base side 9a, 9b opposed to the access side 8a, 8b and two lateral sides 10a, 10b extending vertically at right angles from corresponding folding lines 11a, 11b.

In conclusion, at the end of the folding step each strip 4a, 4b defines one half 12a, 12b of the section member 1 to be manufactured.

Halves 12a, 12b issuing from the folding station 7 meet a punching station 13 where perforations 2 longitudinally distributed according to a predetermined pitch are formed on at least one side of each half. In greater detail, in the embodiment shown it is provided that the perforations 2 of each half 12a, 12b should be formed on the base side 9a, 9b, according to two parallell rows each extending adjacent the folding line 11a, 11b defined between the base side and one of the lateral sides 10a, 10b.

As shown in Fig. 6, said perforations 2 are provided to be carried out upon the action of punches 14 acting across the base side 9a, 9b from the outside to the inside of the corresponding half 12a, 12b and cooperating with respective dies 15 introduced into the half itself through the access side 8a, 8b. This solution ensures the absence of punching burrs on the outer side of the obtained section member 1, as said burrs will be always located on the inner side of the corresponding half 12a, 12b.

As clearly shown in Fig. 1, provision is made for the punching station 13, movable along guide bars 16, to be displaced together with the section halves 12a, 12b while the perforations 2 are being carried out, so that during this operation it is not necessary to stop the forward movement of the product being worked along the apparatus 3.

At each work cycle of the punching station 13, the perforations 2 produced on each half 12a, 12b are distributed over a portion of important length, dependent on the longitudinal extension of the punching station. Advantageously, it is possible to establish the length of the perforated portion at each work cycle. so that it may correspond to the final length of the cut down section pieces 21 to be obtained. This enables possible errors in the distribution pitch of perforations 2 in the finished product to be greatly reduced.

At the exit of the punching station 13, halves 12a and 12b are mutually moved close to each other causing the respective longitudinal edges 17a, 17b defined at the access sides 8a, 8b thereof to mate.

As shown in the sequences of Figs. 6, 7 and 8, the approaching of halves 12a, 12b substantially takes place as a result of opposite angular rotations imparted to said halves about the respective directions of longitudinal extension. These rotations are achieved in an approaching station 18 where halves 12a, 12b are forced to pass through a series of guide rollers, not shown as not of importance to the ends of the invention, submitting them to a longitudinal spring twisting. Obviously the approaching of halves 12a, 12b can also take place in the absence of angular rotation, for example causing the strips 4a, 4b to come to the entry of the folding station 7 already oriented in a vertical direction so that, as a result, the obtained halves 12a, 12b will have their access sides 8a, 8b facing each other.

As clearly shown in Figs. 8 and 9, halves 12a, 12b disposed close to each other define a closed tubular configuration and pass through a jointing station 19 where they are integrally jointed to each other by two junction lines 20 formed between the longitudinal edges 17a, 17b disposed close to each other.

In greater detail, the jointing of halves 12a, 12b preferably takes place by continuous induction welding, carried out in known manner and therefore not further described.

The section member 1 so obtained is finally cut into pieces 21 of the desired length, in a cutting station 22 operating downstream of the jointing station 19. In the same manner as said with reference to the punching station 13, the cutting station 22 as well is operatively mounted on guide rails 23 and is moved together with the product being worked while the cutting is being made.

Turning back to Fig. 2, the section member 1 therein shown and produced by the process in question is comprised, in an original manner and still in accordance with the present invention, of at least two halves 12a and 12b each having a polygonal configuration provided with at least an open access side 8a, 8b. In the example shown either half 12a and 12b of section member 1 has a U-shaped configuration.

Halves 12a and 12b are disposed close to each other in mirror image relationship and the respective longitudinal edges 17a, 27b defined at said access sides 8a, 8b mutually mate so as to impart the desired closed polygonal configuration to the section member 1. In addition, halves 12a and 12b are integrally jointed to each other by at least two junction lines 20 each of which is defined between two of said longitudinal edges 17a, 17b belonging to each of the two halves 12a, 12b respectively. In a preferred embodiment each junction line 20 is defined by at least a continuous induction welding.

In addition, said perforations 2 are formed on at least one of the sides 9a, 9b, 10a, 10b of either half 12a and 12b and they are longitudinally distributed according to a predetermined pitch. In the embodiment shown the perforations 2 of each half 12a, 12b are distributed on the base side 9a, 9b in two parallel rows, each located adjacent one of the folding lines 11a, 11b.

Obviously, the U-shaped configuration of halves 12a, 12b is not to be considered as binding to the ends of the invention. Halves 12a, 12b can in fact have a configuration different from the described one, and can for example have an L-, V- or H-shaped configuration or still other geometrical forms depending upon the final shape to be given to the section member 1.

The present invention attains the intended purposes.

In fact by the process of the invention it is possible to obtain continously made section members having very accurate perforations both as regards their geometrical and size features and their longitudinal distribution pitch even when said perforations are disposed very close to the folding lines. It will be recognized in this connection that the perforations are formed on the previously folded manufactured article and therefore are not concerned with the deformations or rolling processes undergone by the material while being folded.

In addition, the presence of the wide-access side in the two separate halves offers the possibility of introducing the punching dies into the workpiece, thereby ensuring the absence of punching burrs at the outside of the formed section member.

As the section members are continuously worked, the production costs are undoubtedly furthered, there are no restrictions to the length of the section members, and all problems relating the the flexibility of use of the apparatus are eliminated.

Obviously modifications and variations can be made to the invention as conceived, all of them falling within the scope of the inventive idea.

For example, in order to achieve particular geometrical forms the section member issuing from the jointing station could be submitted to further folding steps, at regions sufficiently far away from the perforations present thereon.

## Claims

1.  A process for the continuous manufacture of section members of closed section, or solid section members, provided with bilateral perforations, characterized in that it comprises the following steps:
    - unwinding at least a pair of strips (4a, 4b) from at least two coils (5a, 5b) disposed alongside each other;
    - longitudinally folding each strip (4a, 4b) so as to give it a polygonal configuration open at least at an access side (8a, 8b) thereof, each strip (4a, 4b) defining one half (12a, 12b) of the section member (1) to be achieved;
    - punching the section member halves (12a, 12b) in order to obtain a plurality of perforations (2) distributed longitudinally on at least one side of said open polygonal configuration;
    - moving said halves (12a, 12b) close to each other so that the respective opposite longitudinal edges (17a, 17b) defined at said access sides (8a, 8b) may match thereby defining a closed polygonal configuration;
    - integrally jointing said halves (12a, 12b) along said mating longitudinal edges (17a, 17b);
    - cutting the obtained section member (1) into pieces of the desired length.

2.  A process according to claim 1, characterized in that said jointing step carried out on the section member halves (12a, 12b) takes place by continuous induction welding.

3.  A process according to claim 1, characterized in that said approaching step is carried out by submitting said halves (12a, 12b) to longitudinal twisting actions bringing about angular rotations in the two ways about the respective longitudinal-extension directions.

4.  A process according to claim 1, characterized in that said longitudinal strip folding gives a substantially U-shaped configuration to each half (12a, 12b) forming the section member (1) to be manufactured.

5.  A process according to claim 4, characterized in that said punching operation carries out said plurality of perforations (2) on said halves (12a, 12b) on the side (9a, 9b) thereof opposite the access one (8a, 8b).

6.  A process according to claim 1, characterized in that said perforations (2) are made close to the folding lines (11a, 11b) longitudinally formed on each of said halves (12a, 12b).

7.  A process according to claim 1, characterized in that in said punching step said halves (12a, 12b) which are simultaneously moved lengthwise, are submitted to the action of a punching station (13) moving at the same speed as the halves themselves.

8.  A process according to claim 1, characterized in that in said cutting step the section member (1) being worked which is moved lengthwise, is submitted to the action of a cutting station (22) moving at the same speed as the section member itself.

9.  A section member of closed section provided with bilateral perforations, characterized in that it comprises at least a pair of halves (12a, 12b) each having a polygonal configuration which is at least open at an access side (8a, 8b) thereof and is provided with perforations (2) distributed on at least one of its sides, said halves (12a, 12b) mutually mating at respective longitudinal edges (17a, 17b) defined on said access sides (8a, 8b) in order to form a closed polygonal configuration, and being integrally jointed by at least two junction lines (20) each defined between two of said longitudinal edges (17a, 17b) belonging to either half (12a, 12b) respectively.

10. A section member according to claim 9, characterized in that each half (12a, 12b) of the section member (1) has an open U-shaped polygonal configuration.

11. A section member according to claim 10, characterized in that said perforations (2) are formed in each section member half (12a, 12b) on the side thereof (9a, 9b) opposite the access one (8a, 8b).

12. A section member according to claim 9, characterized in that said perforations (2) are disposed close to the folding lines (11a, 11b) defined lengthwise on each of said halves (12a, 12b).

13. A section member according to claim 9, characterized in that each of said junction lines (20) is comprised of at least a welding.

FIG.1

FIG.2

EP 0 503 217 A2

FIG.3

FIG.4

FIG.5

FIG.6

FIG.7

FIG.8

FIG.9